# EUROPEAN PATENT SPECIFICATION

(11) **EP 3 629 722 B1**
(45) Date of publication and mention of the grant of the patent: **03.11.2021**
(21) Application number: 18805232.8
(22) Date of filing: 23.05.2018
(51) Int. Cl.: A01K 91/18, A01K 97/06, A01K 75/00

(54) **MOBILE FISHING NET AND LONGLINE DEPLOYER**
MOBILES FISCHNETZ UND LANGLEINENAUSGEBER
FILET DE PÊCHE MOBILE ET DISPOSITIF DE DÉPLOIEMENT DE FILET DE PÊCHE MOBILE

(30) Priority: 24.05.2017 NO 20170853
(43) Date of publication of application: 08.04.2020
(73) Proprietor: Hanbo AS, 5107 Salhus (NO)
(72) Inventor: HANSEN, Bjorn-Kristian, 4618 Kristiansand (NO)
(74) Representative: Håmsø Patentbyrå AS
(86) International application number: PCT/NO2018/050134
(87) International publication number: WO 2018/217097

(56) References cited:
- EP-A1- 0 248 741
- CA-A- 1 135 057
- FR-A1- 2 370 428
- JP-A- H05 130 822
- KR-B1- 101 711 342
- NO-B1- 301 743
- US-A- 1 221 904
- US-A- 3 841 011
- US-A- 4 896 449

## Description

The invention relates to a device for guiding fishing gear, for example a longline or a fishing net, out of a container, the device comprising a housing with an inlet, a guide channel and an outlet for the fishing gear. The device is further provided with a coupling flange arranged to rest supportingly against the container or an adapter.

### Background of the invention

In longline fishing, a boat and fishing gear consisting of a mainline with first and second end portions are used. A plurality of shorter lines are attached to the line. The shorter line is referred to as a snood. The snood is provided with a hook at its free end. At its first end portion and second end portion, the longline is provided with weights anchoring the longline to a seabed. The first and second end portions of the longline are attached to buoy ropes. The buoy rope is attached, at its free end, to a floating body, usually a buoy.

Before the longline is deployed, it must be baited. The longlines of smaller boats are often baited manually on shore, and the longline with snoods, hooks and bait is coiled up in a longline tub. The longline tub may be formed of a box, a bucket or a barrel, for example. To prevent hooks and bait from catching on the longline rope or the snood when the longline is coiled up in the longline tub, it is known to put newspaper between the coils. A fishing boat may carry with it from a few up to 100 longline tubs, each longline generally comprising between 300 and 400 snoods with hooks.

To prevent the hooks from catching during deployment, for example on a gunwale or a piece of clothing, it is known to use a longline deployer which guides the longline from the longline tub, over the gunwale and into water. The gravity of the weight at the first end portion of the longline and the propulsion of the boat pull the longline out of the longline tub and through the longline deployer. Alternatively, a motor-driven longline deployer which may be connected to a baiting machine may be used.

Prior-art longline deployers are attached to a side or an aft portion of the boat, and the longline tub is moved to under the attached longline deployer. The size and weight of the longline tub entail the fact that a fisher will have to stand upright to move the longline tub. The prior-art deployment of a longline therefore requires a boat that is stable enough for a grown-up person to stand upright and move the longline tub with and without a longline around the boat without the risk of the boat becoming unstable. In practice, this means that a prior-art longline deployer will only be usable on a larger boat, for example a "sjark" (a traditional Norwegian fishing boat)..

When a longline is being deployed, it is known in the art to place a first longline tub including a first longline and a second longline tub including a second longline next to each other under the longline deployer. The first end portion of the first longline is attached to a first buoy rope provided with a buoy. The second end portion of the first longline is attached to the first end portion of the second longline. When the first longline tub is empty, it is replaced with a third longline tub including a third longline. By joining a plurality of longlines as described, longlines from several longline tubs may form one long longline. At the free end portion of the last longline, a second buoy rope provided with a buoy is attached.

Many fishing boats are used for catching different species of fish and the fishing methods used vary. On smaller fishing boats, the longline deployer is therefore usually dismantled when not in use, so that space is freed up aboard the boat. The installation and dismantling of the longline deployer may happen several times a year. The installation and dismantling may be time-consuming and may include the use of a crane.

Because a prior-art longline deployer is too large to be used on a small boat, the deploying of a longline from a small boat is done by the longline being passed directly from the longline tub, over the gunwale and into the water. The longline tub used on small boats is usually a bucket or a small tub. To prevent the hooks from catching on the gunwale, the longline may be lifted manually over the gunwale. However, this involves a risk of a hook catching on a piece of clothing or a body part, typically a hand or a finger. For the reasons mentioned, longline fishing is therefore not widely used on small boats and among recreational fishers.

Patent document US 3841011 A discloses a fixedly arranged longline deployer for continuously deploying a longline from several longline tubs. The device includes a baiting unit.

Patent document NO 301743 B1 discloses a device for deploying a longline which includes, among other things, a rotatable deploying funnel in the form of a pipe or a channel including a mounting rod connected to the aft end of the boat.

Patent document US 4896449 discloses a device for deploying a longline, the device including a platform arranged to receive a longline tub, the longline being pulled automatically out of the longline tub.

Patent document US 1221904 A discloses a trawl tub of the related art.

### Description of the invention

The invention has for its object to remedy or reduce at least one of the drawbacks of the prior art or at least provide a useful alternative to the prior art.

The object is achieved through the features that are specified in the description below and in the claims that follow.

The invention relates to a device for guiding fishing gear out of a container, the device comprising a housing with a first portion which forms an inlet for the fishing gear, a second portion which forms an outlet for the fishing gear, and there being a guide channel for the fishing gear, extending from the inlet to the outlet. The guide channel is arranged to guide the fishing gear out of the container over a gunwale on a boat.

The first portion is provided with a coupling portion arranged to receive a portion of the container or an adapter arranged between the housing and the container.

In the specialist jargon, the device is referred to as a longline deployer. In the specialist jargon, the container is referred to as a longline tub. By fishing gear, a longline or a fishing net is understood.

The container is adapted for storing the longline or the fishing net. The container may be of various shapes and sizes. The container may be round or quadrilateral. The container may be formed of a bucket, a trough or a barrel. The container may further be formed from various materials, for example plastic, wood or metal.

The device may include an adapter provided with a first coupling portion arranged to rest supportingly against the coupling portion of the device and a second coupling portion arranged to rest supportingly against the container.

The adapter is arranged to form a connection between the device and the container when the coupling portion of the device cannot rest supportingly against the container, or when the device is to be connected to containers of different cross sections.

The device may include a first locking device for releasable attachment to the container or the adapter. The adapter may include a second locking device for releasable attachment to the container. The first locking device and the second locking device may be identical and they may be shared.

The locking device may comprise a bucket-and-lid principle, in which the coupling portion of the device is pressed down into engagement over a corresponding coupling portion on the adapter or the container.

In an alternative embodiment, the locking device may comprise a surrounding locking ring with a prior-art eccentric lock. The locking ring may comprise a U-profile enclosing the coupling portion of the device and the corresponding coupling portion of the adapter or the container.

In an alternative embodiment, the locking device may include an eccentric lock. The eccentric lock may be attached to the device and may be clamped to a hook holder attached to the adapter or the container. If the adapter or the corresponding coupling portion of the container includes a downward flange edge, an eccentric lock with a hook may be used, wherein the hook grips on the flange edge.

In an alternative embodiment, the device may include a housing with a slit portion arranged to be opened or closed by means of an eccentric lock, thereby clamping the housing radially to the container.

In an alternative embodiment, the locking device may comprise a rubber strap with associated attachment knobs, the use of which on tarpaulins for vehicles and trailers, for example, is known. The flexibility of the rubber strap makes the attachment knobs not having to be placed in exact positions.

The invention may include a combination of several locking devices.

The device may comprise a carrying device arranged for the device to be easily moved, for example from a first container to a second container. The carrying device may be a strap or a handle. The handle may be integrated in the housing and the handle may be a separate part attached to the device.

The device may include a safety device arranged to be secured to a boat, the safety device being arranged to prevent the device from falling into the water or toppling. The safety device may, for example, comprise a chain or a rope.

The device may include a buoyancy means arranged to keep the device afloat if it falls into the water. The buoyancy means may be integrated in the housing, for example by a cavity, adapted for receiving a buoyancy means, being formed in the housing. The buoyancy means may comprise a buoyancy body attached to the device.

The device may include a housing formed of a non-metallic material, for example glass fibre, plastic or a composite material. The housing may be formed in one piece of material. By forming the housing from one of the materials mentioned and in one piece of material, joints in the form of welding and rivets and sharp corners and edges that are typical in a metal structure can be prevented.

As described initially, a prior-art longline deployer is arranged to be attached to the boat, and the longline tub must be moved to a vicinity of the longline deployer. The invention builds on an opposite principle; namely, letting the longline tubs be stationary and, instead, moving the longline deployer from a first longline tub to a second longline tub. As long as the longline tubs are within reach, the moving of the longline deployer can happen from a, for the fisher, sitting position. Thereby the invention provides a possibility of using a longline deployer on a small boat, for example an open dinghy with limited space and limited stability.

The invention may further contribute to making the deployment of a longline from a boat without a fixed longline deployer possible without the risk of the hooks catching on the boat, a piece of clothing or a body part. The invention also simplifies the deployment of nets from small boats. A longline deployer according to the invention can also easily be moved from one boat to another boat and in a vehicle.

### Exemplary embodiments

In what follows, examples of preferred embodiments are described, which are visualized in the accompanying drawings, in which:
- Figure 1: shows a side view of a first alternative embodiment of a longline deployer according to the invention;
- Figure 2: shows a top view, on the same scale as figure 1, of the longline deployer;
- Figure 3: shows a side view of the longline deployer attached to a longline tub;
- Figure 4: shows a top view of the longline deployer attached to a longline tub;
- Figure 5: shows a side view of the longline deployer attached to an adapter attached between the longline deployer and a large longline tub;
- Figure 6: shows a top view of an adapter arranged to be attached to a large round longline tub;
- Figure 7: shows a top view of an adapter arranged to be attached to a quadrilateral longline tub;
- Figure 8: shows a side view of the fishing-net and longline deployer in a position of application in a small boat;
- Figure 9: shows a side view of a longline deployer in an alternative embodiment, and
- Figure 10: shows a top view of the alternative longline deployer.

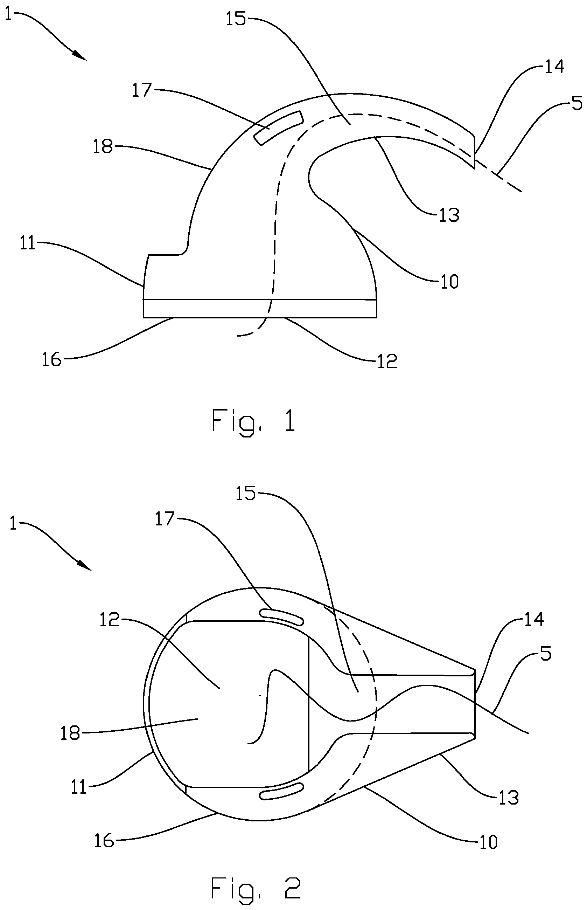

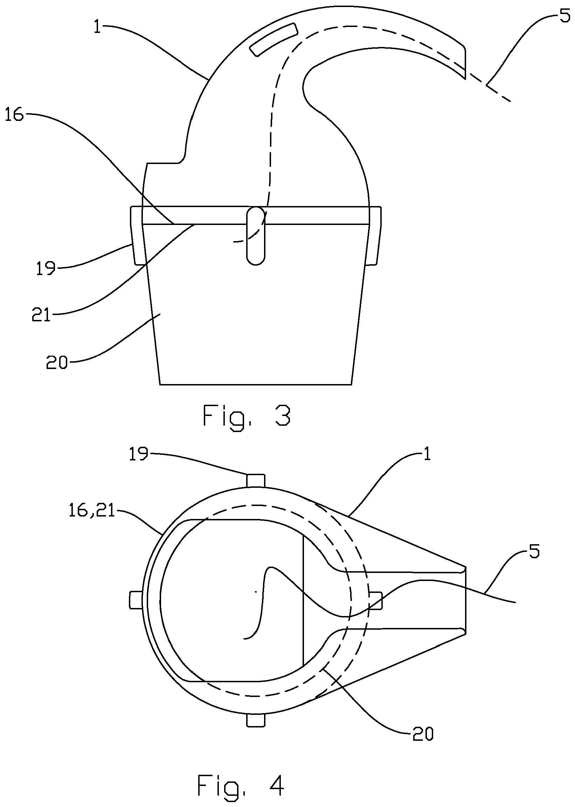

Figures 1 and 2 show a device 1, shown here as a longline deployer, seen from the side and from above, respectively. The longline deployer 1 is adapted for guiding fishing gear, for example a longline 5 or a fishing net, out of a container 20, shown as a longline tub in figures 3 and 4. The longline deployer 1 comprises a housing 10 formed of moulded plastic in one piece of material. A first end portion 11 is provided with a coupling portion 16, shown here as a coupling flange arranged to rest supportingly against the longline tub 20 or an adapter 30 shown in figures 3, 4 and 5.

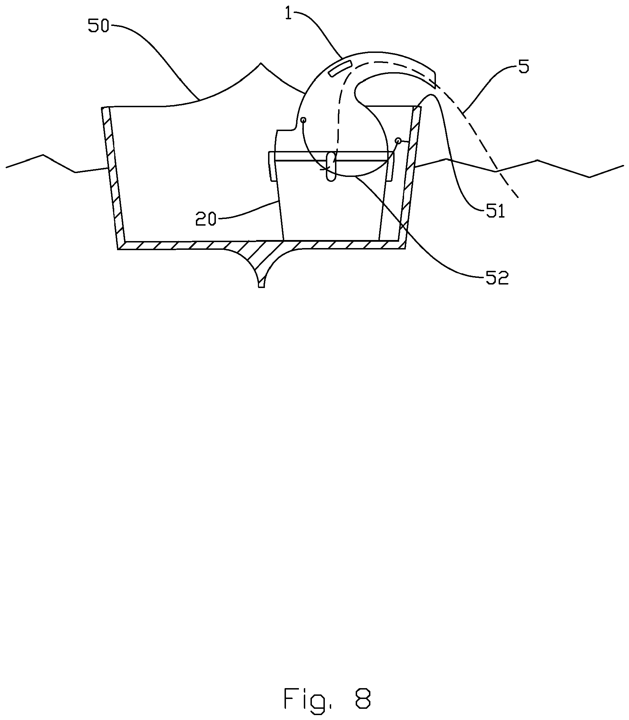

A guide channel 15 extends from an inlet 12 to an outlet 14. The guide channel 15 is arranged to guide the longline 5 out of the longline tub 20 over a gunwale 51 on a boat 50 and into water 60 as shown in figure 8. The guide channel 15 is provided with a smooth surface without any sharp edges, so that the longline 5 or the fishing net (not shown) can glide freely through the guide channel 15. The housing 10 is provided with an open back portion 18 extending from the lower end portion 11 to the outlet 14. The open back portion 18 is arranged to give a person access to the longline tub 20 in a position of application when the longline deployer 1 is arranged on the longline tub 20. In the position of application, the longline 5 is picked up from the longline tub 20 and threaded through the guide channel 15 and the outlet 14 and into the water 60.

The longline deployer 1 is further provided with a carrying device, shown as a handle 17 in the figures. The handle 17 is formed by cutting a through opening in a portion of the housing 10.

Figure 3 and 4 show the longline deployer 1 seen from the side and from above, respectively, in a position of application. The coupling portion 16 of the longline deployer 1 is resting supportingly against a coupling portion 21 of the longline tub 20. The longline deployer 1 and the longline tub 20 are releasably attached to each other via a first locking device 19, for example an eccentric lock.

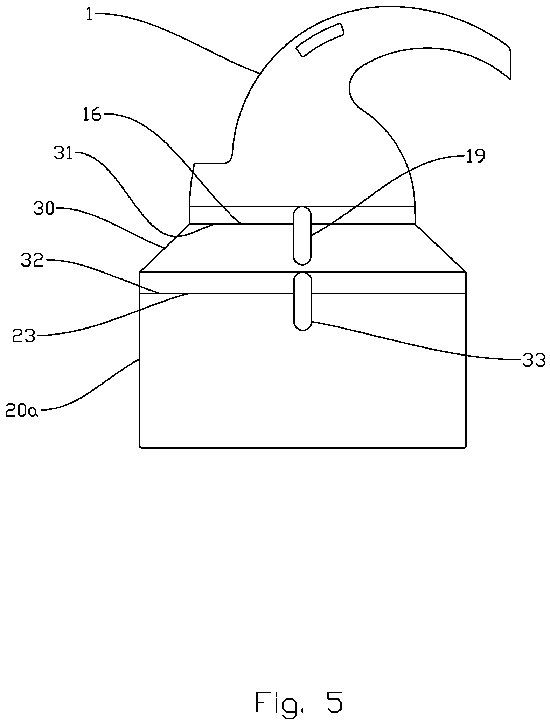

Figure 5 shows an alternative embodiment in which the longline deployer 1 is arranged on a large longline tub 20a via an adapter 30 provided with a first coupling portion 31 and a second coupling portion 32. The coupling portion 16 of the longline deployer 1 is resting supportingly against the first coupling portion 31 of the adapter 30. The second coupling portion 32 of the adapter 30 is resting supportingly against a coupling portion 23 belonging to the large longline tub 20a. The longline deployer 1 is releasably attached to the adapter 30 via the first locking device 19. The adapter 30 is releasably attached to the large longline tub 20a via a second locking device 33.

When the longline deployer 1 is to be moved from a first large longline tub 20a to a second large longline tub 20a, the second locking device 33 is opened while the first locking device 19 is kept closed.

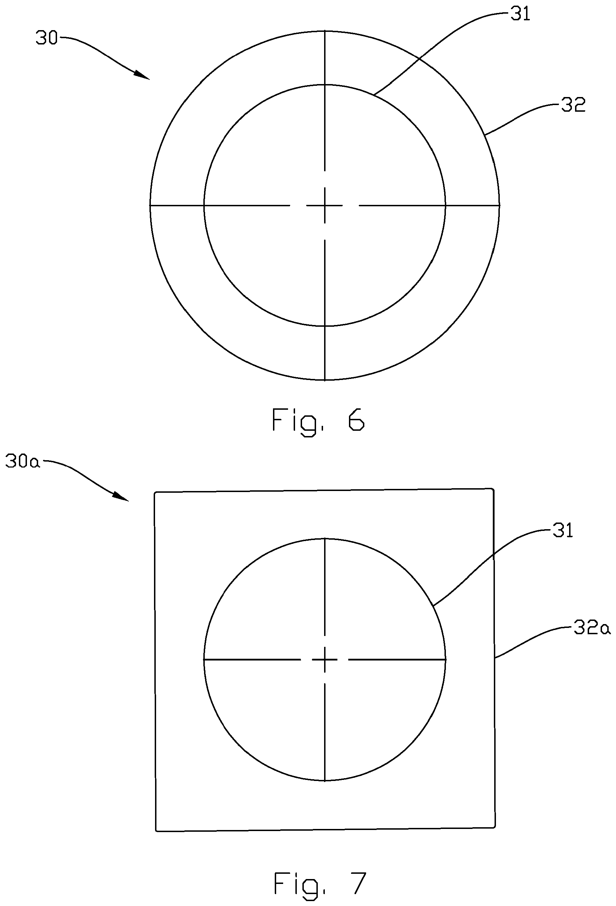

Figure 6 shows a ground plan of a round adapter 30 seen from above. The first coupling portion 31 of the adapter 30 is adapted to the coupling portion 16 of the longline deployer. The second coupling portion 32 of the adapter is adapted to a large longline tub 21 provided with a circular cross section.

Figure 7 shows a ground plan of a quadrilateral adapter 30a seen from above. The first coupling portion 31 of the quadrilateral adapter 30a is adapted to the coupling portion 16 of the longline deployer. The second coupling portion 32a of the quadrilateral adapter 30a is adapted to a large longline tub 22a provided with a quadrilateral cross section.

Figure 8 shows the longline deployer 1 in a position of application in a small boat 50 where the longline deployer 1 is attached to the boat 50 with a safety device 52 arranged to prevent the longline deployer 1 from falling into the water 60.

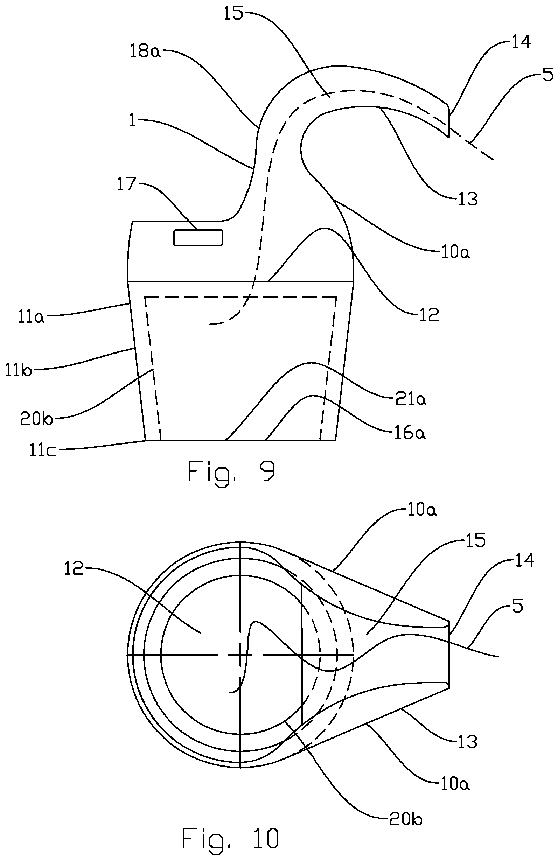

Figures 9 and 10 show an alternative embodiment of the longline deployer 1 seen from the side and from above, respectively. The housing 10a is attached to the container 20b by the coupling portion 21a of the container 20b resting supportingly against the coupling portion 16a of the housing. The coupling portion 16a is shown as an unbroken surface arranged to carry the container 20b. A horizontal movement of the container 20b is prevented or restricted by the end portion 11a of the housing 10a including a surrounding wall portion 11b. The housing 10a is further provided with a wide open back portion 18a arranged to provide space for the container 20b to be moved in and out of the housing 10a.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A device (1) for guiding fishing gear (5) out of a container (20, 20a, 20b), the device (1) comprising a housing (10, 10a) with a first portion (11, 11a) which forms an inlet (12) for the fishing gear (5), a second portion (13) which forms an outlet (14) for the fishing gear (5),
**characterized in**
**that** a guide channel (15) for the fishing gear (5) extends from the inlet (12) to the outlet (14), the guide channel (15) being arranged to guide the fishing gear (5) out of the container (20, 20a, 20b) over a gunwale (51) on a boat (50), and that the housing (10, 10a) is provided with a coupling flange (16) arranged to receive a portion of the container (20, 20a, 20b) or an adapter (30, 30a) arranged between the housing (10) and the container (20, 20a)

2. The device (1) according to claim 1, wherein the device (1) includes a first locking device (19) for releasably attaching the device (1) to the container (20, 20a) or the adapter (30, 30a).

3. The device (1) according to claim 1, wherein the device (1) Is provided with a carrying device (17) arranged to be used when the device (1) is being moved.

4. The device (1) according to claim 1, wherein the device (1) includes a safety device (52) arranged to attach the device (1) to a boat (50).

5. The device (1) according to claim 1, wherein the device includes a buoyancy means.

6. The device (1) according to claim 1, wherein the housing (10, 10a) is formed from a non-metallic material.

## Patentansprüche

1. Vorrichtung (1) zum Herausführen eines Fischfanggeräts (5) aus einem Behälter (20, 20a, 20b), wobei die Vorrichtung (1) ein Gehäuse (10, 10a) mit einem ersten Abschnitt (11, 11a), der einen Einlass (12) für das Fischfanggerät (5) bildet, und einen zweiten Abschnitt (13), der einen Auslass (14) für das Fischfanggerät (5) bildet, umfasst, **dadurch gekennzeichnet**
**dass** sich ein Führungskanal (15) für das Fischfanggerät (5) vom Einlass (12) zum Auslass (14) erstreckt, wobei der Führungskanal (15) derart angeordnet ist, dass er das Fischfanggerät (5) aus dem Behälter (20, 20a, 20b) über ein Dollbord (51) an einem Boot (50) herausführt, und dass das Gehäuse (10, 10a) mit einem Kupplungsflansch (16) zur Aufnahme eines Teils des Behälters (20, 20a, 20b) oder eines Adapters (30, 30a), der zwischen dem Gehäuse (10) und dem Behälter (20, 20a) angeordnet ist, versehen ist.

2. Vorrichtung (1) nach Anspruch 1, wobei die Vorrichtung (1) eine erste Verriegelungsvorrichtung (19) zur lösbaren Befestigung der Vorrichtung (1) an dem Behälter (20, 20a) oder dem Adapter (30, 30a) umfasst.

3. Vorrichtung (1) nach Anspruch 1, wobei die Vorrichtung (1) mit einer Tragevorrichtung (17) versehen ist, die derart angeordnet ist, dass sie verwendet wird, wenn die Vorrichtung (1) bewegt wird.

4. Vorrichtung (1) nach Anspruch 1, wobei die Vorrichtung (1) eine Sicherheitsvorrichtung (52) umfasst, die derart angeordnet ist, dass sie die Vorrichtung (1) an einem Boot (50) befestigt.

5. Vorrichtung (1) nach Anspruch 1, wobei die Vorrichtung ein Auftriebsmittel umfasst.

6. Vorrichtung (1) nach Anspruch 1, wobei das Gehäuse (10, 10a) aus einem nicht-metallischen Material gebildet ist.

## Revendications

1. Un dispositif (1) de guidage d'engin de pêche (5) hors d'un conteneur (20, 20a, 20b), le dispositif (1) comprenant un boîtier (10, 10a) avec une première partie (11, 11a) qui forme une entrée (12) pour l'engin de pêche (5), une seconde partie (13) qui forme une sortie (14) pour l'engin de pêche (5),
**caractérisé en ce que**
un canal de guidage (15) pour l'engin de pêche (5) s'étend de l'entrée (12) à la sortie (14), le canal de guidage (15) étant disposé pour guider l'engin de pêche (5) hors du conteneur (20, 20a, 20b) par-dessus un lisse de pavois (51) sur un bateau (50), et que le boîtier (10, 10a) est muni d'une bride d'accouplement (16) agencée pour recevoir une partie du conteneur (20, 20a, 20b) ou un adaptateur (30, 30a) agencé entre le boîtier (10) et le conteneur (20, 20a).

2. Le dispositif (1) selon la revendication 1, dans lequel le dispositif (1) inclut un premier dispositif de verrouillage (19) pour fixer de manière amovible le dispositif (1) au conteneur (20, 20a) ou à l'adaptateur (30, 30a).

3. Le dispositif (1) selon la revendication 1, dans lequel le dispositif (1) est pourvu d'un dispositif de transport (17) agencé pour être utilisé lorsque le dispositif (1) est en train d'être déplacé.

4. Le dispositif (1) selon la revendication 1, dans lequel le dispositif (1) inclut un dispositif de sécurité (52) agencé pour attacher le dispositif (1) à un bateau (50).

5. Le dispositif (1) selon la revendication 1, dans lequel le dispositif inclut un moyen de flottabilité.

6. Le dispositif (1) selon la revendication 1, dans lequel le boîtier (10, 10a) est formé à partir d'un matériau non métallique.
